# EUROPEAN PATENT SPECIFICATION

(11) **EP 3 495 085 B1**
(45) Date of publication and mention of the grant of the patent: **06.07.2022**
(21) Application number: 17836691.0
(22) Date of filing: 07.07.2017
(51) Int. Cl.: B23K 9/10, B23K 9/29, B23K 31/00, G09G 5/00, G09G 5/36, B23K 5/24, B23K 9/013

(54) **THERMAL PROCESSING TORCH AND THERMAL PROCESSING SYSTEM**
WÄRMEBEHANDLUNGSBRENNER UND WÄRMEBEHANDLUNGSSYSTEM
CHALUMEAU DE TRAITEMENT THERMIQUE ET SYSTÈME DE TRAITEMENT THERMIQUE

(30) Priority: 05.08.2016 JP 2016154191
(43) Date of publication of application: 12.06.2019
(73) Proprietor: DAIHEN Corporation, Osaka-shi, Osaka 532-8512 (JP)
(72) Inventor: IMAMACHI, Hiroki, Osaka-shi Osaka 532-8512 (JP)
(74) Representative: Boult Wade Tennant LLP
(86) International application number: PCT/JP2017/024948
(87) International publication number: WO 2018/025584

(56) References cited:
- DE-A1-102010 042 591
- JP-A- H03 297 572
- JP-A- H09 307 968
- JP-A- 2005 527 381
- JP-A- 2015 533 651
- JP-B2- 4 543 065
- US-A1- 2012 199 566
- US-A1- 2015 325 153
- US-A1- 2016 125 593

## Description

### TECHNICAL FIELD

The present invention relates to a thermal processing torch and a thermal processing system used for thermal processing. Document DE 10 2010 042 591 A1 discloses a thermal processing torch according to the preamble of claim 1.

### BACKGROUND ART

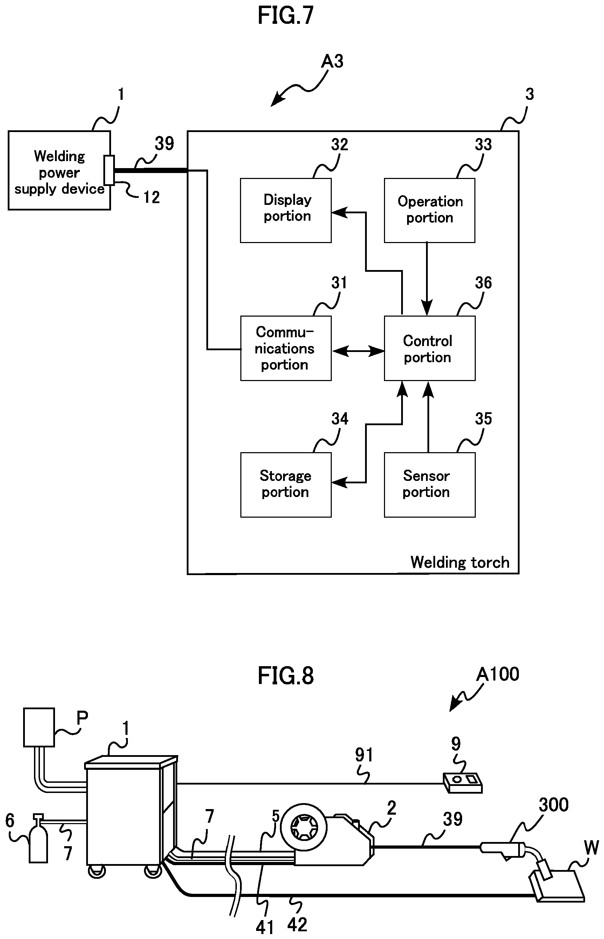

FIG. 8 shows an example of an ordinary consumable electrode type welding system. In a welding system A100, arc welding is performed by a wire feeding device 2 feeding a wire electrode to a welding torch 300, and a welding power supply device 1 supplying electric power to the welding torch 300. In the welding work, a worker performs welding with welding conditions adjusted according to a workpiece W. The welding conditions are adjusted by operating an operation panel of the welding power supply device 1 or an operation portion of a remote controller 9 connected to the welding power supply device 1.

US 2016/125593 describes a welding training system which monitors a welding environment and records welding data to provide feedback to a welding operator.

### SUMMARY OF INVENTION

When welding work is performed while changing the welding location, the worker carries the wire feeding device 2 and performs the welding work without moving the welding power supply device 1. However, because a control cable 91 of the remote controller 9 is short, when the welding work is performed away from the welding power supply device 1, there may be cases where it is not possible to bring the remote controller 9 to the welding location. In this case, it is necessary for the worker to move to the location of the welding power supply device 1 or the remote controller 9 in order to adjust the welding conditions.

Also, in the welding power supply device 1 of recent years, there are many items that can be set, such that detailed settings are possible according to the diversity of the workpiece W. For example, in addition to welding current and welding voltage, it is also possible to set the frequency of a welding current waveform, the EN ratio (duty ratio), the feeding speed of the welding wire of the wire feeding device 2, the plate thickness of the workpiece W, and the like.

These problems are not limited to welding systems, and also exist in thermal processing systems such as arc cutting systems.

The present invention was conceived under the circumstances described above, and it is an object of the present invention to provide a thermal processing system and a thermal processing torch used in the thermal processing system, in which when performing work at a location away from a power supply device, desired settings can easily be set even if a large number of settable items are provided.

### MEANS FOR SOLVING PROBLEMS

In order to solve the above problems, in the present invention, the following technical means are adopted.

According to a first aspect of the present invention, a thermal processing torch is provided. The thermal processing torch includes an operation portion, a display portion, a sensor portion, a communications portion, and a control portion. The operation portion has an operation button. The display portion has a display screen. The sensor portion detects inclination information. The communications portion transmits a signal. The control portion causes the communications portion to transmit a signal based on an input from the operation portion. The control portion causes the display screen to display a menu screen for selecting a desired screen among a plurality of screens based on the inclination information detected by the sensor portion. The control portion causes the menu screen to be displayed in a case where the inclination information detected by the sensor portion is within a predetermined range.

According to a second aspect of the present invention, a thermal processing system is provided. The thermal processing system includes a thermal processing torch provided by the first aspect of the present invention and a power supply device that supplies electric power to the thermal processing torch.

Other features and advantages of the present invention will become more apparent from the detailed description given below with reference to the accompanying drawings.

### BRIEF DESCRIPTION OF DRAWINGS

FIG. 1A is a schematic diagram showing the overall configuration of a welding system according to a first embodiment.
FIG. 1B is a block diagram showing the functional configuration of a welding system according to the first embodiment.
FIG. 2A is a front view of an example of a welding torch according to the first embodiment.
FIG. 2B is a plan view of an example of a welding torch according to the first embodiment.
FIG. 3A shows a case where each screen to be displayed on a display is switched in sequence.
FIG. 3B shows a case where a desired screen is selected from a menu screen.
FIG. 4 is a diagram for explaining an attitude of a welding torch.
FIG. 5 is a flowchart for explaining processing to receive an operation input.
FIG. 6 is a block diagram showing the functional configuration of a welding system according to a second embodiment.
FIG. 7 is a block diagram showing the functional configuration of a welding system according to a third embodiment.
FIG. 8 is a schematic diagram showing the overall configuration of an example of an ordinary consumable electrode type welding system.

### MODE FOR CARRYING OUT INVENTION

Embodiments of the present invention will be specifically described below with reference to the drawings, taking as an example a case where the present invention is applied to a welding torch (welding system).

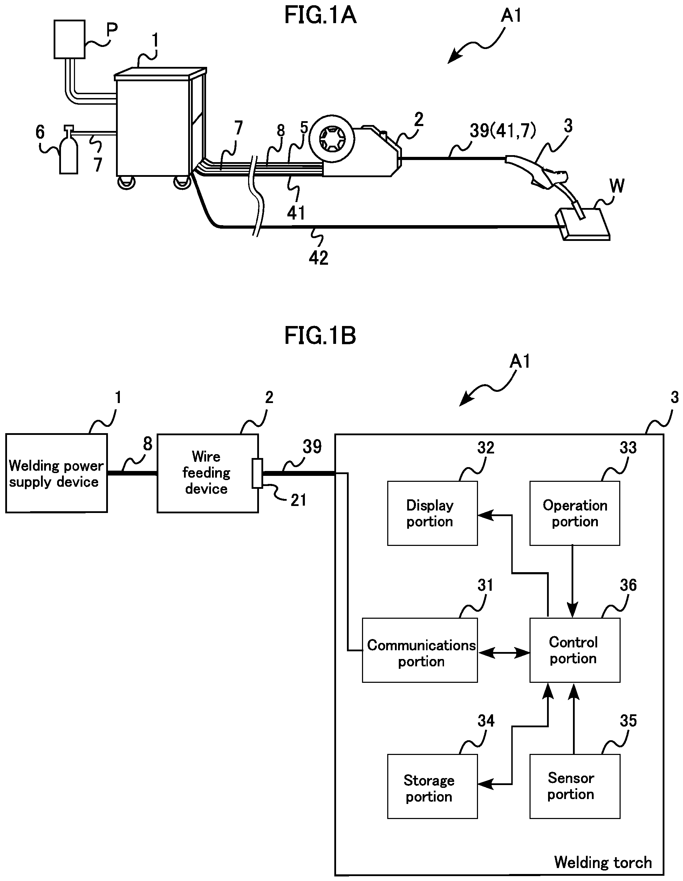

FIGS. 1A and 1B are diagrams for explaining a welding system A1 according to a first embodiment. FIG. 1A is a schematic diagram showing the overall configuration of the welding system A1 according to the first embodiment. FIG. 1B is a block diagram showing the functional configuration of the welding system A1.

As shown in FIGS. 1A and 1B, the welding system A1 includes a welding power supply device 1, a wire feeding device 2, a welding torch 3, power cables 41 and 42, an electric power transmission line 5, a signal line 8, a gas cylinder 6 and a gas pipe 7. In the present embodiment, the welding system A1 corresponds to, for example, a "thermal processing system", and the welding torch 3 corresponds to, for example, a "thermal processing torch". One output terminal of the welding power supply device 1 is connected to the welding torch 3 through the power cable 41. The wire feeding device 2 feeds the wire electrode to the welding torch 3 and causes the tip of the wire electrode to protrude from the tip of the welding torch 3. In a contact chip disposed at the tip of the welding torch 3, the power cable 41 and the wire electrode are electrically connected. The other output terminal of the welding power supply device 1 is configured to be connected to the workpiece W through the power cable 42. The welding power supply device 1 generates an arc between the tip of the wire electrode that protrudes from the tip of the welding torch 3 and the workpiece W, and supplies electric power to the arc. The welding system A1 performs welding of the workpiece W with the heat of the arc.

The welding system A1 uses shielding gas when performing welding. Shielding gas from the gas cylinder 6 is supplied to the tip of the welding torch 3 by the gas pipe 7, which is provided so as to pass through the welding power supply device 1 and the wire feeding device 2. Electric power (for example, DC 24V) for driving a feed motor or the like is supplied from the welding power supply device 1 to the wire feeding device 2 through the electric power transmission line 5. Also, the welding power supply device 1 and the wire feeding device 2 communicate through the signal line 8.

The welding power supply device 1 supplies electric power for arc welding to the welding torch 3. The welding power supply device 1 converts three-phase alternating current electric power input from an electric power system P into electric power suitable for arc welding, and outputs this electric power. Also, the welding power supply device 1 converts the three-phase alternating current electric power input from the electric power system P into direct current electric power for driving the feed motor or the like of the wire feeding device 2, and outputs this electric power through the electric power transmission line 5 to the wire feeding device 2.

The welding power supply device 1 is controlled to output the electric power according to welding conditions or the like, and the welding conditions or the like are changed according to operation of an operation portion (not shown). Also, the welding power supply device 1 changes the welding conditions or the like according to a signal input from the welding torch 3 through the signal line 8.

The wire feeding device 2 feeds the wire electrode to the welding torch 3. The wire electrode passes through the interior of a liner provided inside a torch cable 39 and the welding torch 3, and is guided to the tip of the welding torch 3. The wire feeding device 2 drives the feed motor or the like with the electric power supplied from the welding power supply device 1 through the electric power transmission line 5. This electric power is also supplied from the wire feeding device 2 to the welding torch 3 through an electric power transmission line (not shown) provided inside the torch cable 39. The wire feeding device 2 communicates with the welding power supply device 1 through the signal line 8. Also, the wire feeding device 2 communicates with the welding torch 3 through a signal line (not shown) provided inside the torch cable 39. Communications between the welding torch 3 and the welding power supply device 1 are performed through the wire feeding device 2.

The wire feeding device 2 and the welding torch 3 are connected by the torch cable 39. The torch cable 39 is connected to a base end of the welding torch 3, and disposed inside of the cable are the power cable 41, the gas pipe 7, the liner, the electric power transmission line and the signal line.

A connector 21 is a connection terminal for connecting the welding torch 3 and the wire feeding device 2. For example, the connector 21 is a recessed connection terminal and connects the welding torch 3 and the wire feeding device 2 by inserting a protruding torch plug (not shown) provided at one end of the torch cable 39 of the welding torch 3. The power cable 41, the gas pipe 7, the liner, the electric power transmission line 5 and the signal line 8 inside of the wire feeding device 2 are respectively configured to be connected to the power cable 41, the gas pipe 7, the liner, the electric power transmission line and the signal line inside of the torch cable 39 through this connector 21.

The welding torch 3 performs welding of the workpiece W by welding electric power supplied from the welding power supply device 1. The welding torch 3 includes, as functional blocks, a communications portion 31, a display portion 32, an operation portion 33, a storage portion 34, a sensor portion 35, and a control portion 36.

The communications portion 31 performs communications with the wire feeding device 2. The communications portion 31 transmits a signal input from the control portion 36 to the wire feeding device 2 through the signal line inside the torch cable 39. Also, the communications portion 31 receives a signal input from the wire feeding device 2 through the signal line inside the torch cable 39, and outputs the received signal to the control portion 36. As a communications standard, for example, the CAN (Controller Area Network) standard is used.

The display portion 32 performs various display, and is provided with, for example, a display 321 (described later) that is a liquid crystal display device. The display portion 32 is controlled by the control portion 36, and performs display of welding conditions or the like stored in the storage portion 34.

The operation portion 33 has a plurality of operation means, and outputs operation of each operation means by a worker to the control portion 36 as an operation signal. As described later, a torch switch 331 and operation buttons 332 serve as the operation means. Note that other operation means may be provided in the operation portion 33.

The storage portion 34 stores various settings values for welding conditions or the like, and information regarding total welding time or the like, for example.

The sensor portion 35 has a plurality of sensors, and outputs detection values of each sensor to the control portion 36. In the present embodiment, the sensor portion 35 is provided with an acceleration sensor 351 described later. Note that the sensor portion 35 may be provided with other sensors.

The control portion 36 controls the welding torch 3, and is realized by, for example, a microcomputer or the like. The control portion 36 performs predetermined processing according to an operation signal input from the operation portion 33. Also, the control portion 36 performs a predetermined calculation based on the detection values input from the sensor portion 35, and uses the calculation results for processing. Also, the control portion 36 controls communications by the communications portion 31, writing and reading of information of the storage portion 34, and display by the display portion 32. The specific content of control will be described later.

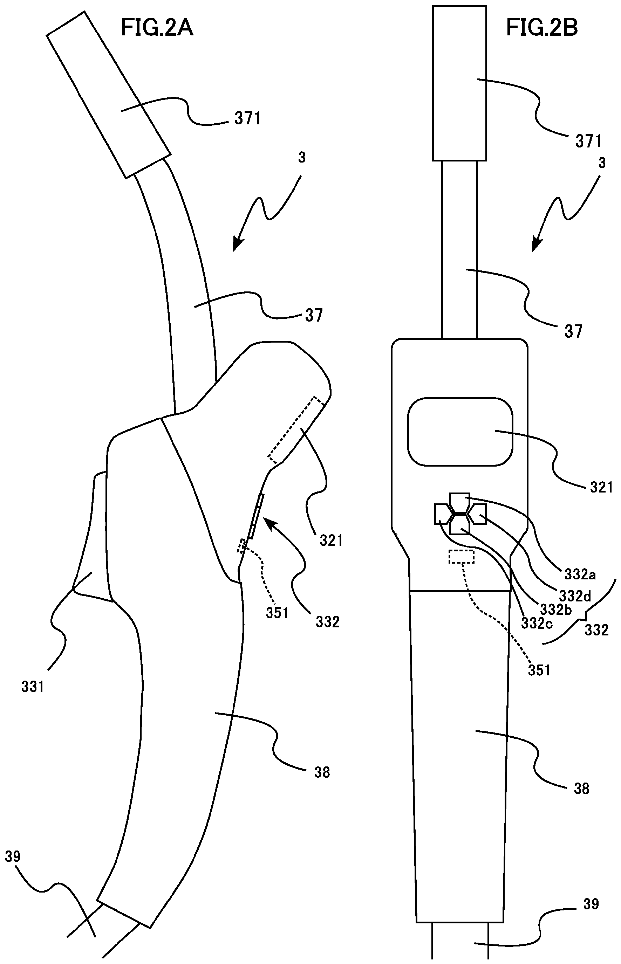

FIGS. 2A and 2B show the external appearance of an example of the welding torch 3. FIG. 2A is a front view, and FIG. 2B is a plan view. As shown in FIGS. 2A and 2B, the welding torch 3 includes a torch body 37, a handle 38, the torch switch 331, the operation buttons 332, the display 321, the acceleration sensor 351, and the torch cable 39.

The torch body 37 is a tubular member made of metal, inside of which are disposed the liner through which the welding cable is inserted, the power cable 41, and the gas pipe 7. A nozzle 371 is attached to the tip of the torch body 37. The torch body 37 has a curved portion such that the worker can easily direct the nozzle 371 at the workpiece W.

The handle 38 is a part to be gripped by the worker and is provided so as to hold a base end portion of the torch body 37. The worker grips this handle 38 and performs welding work. The torch switch 331, the operation buttons 332, and the display 321 are disposed in the handle 38.

The torch switch 331 is an operation means for receiving welding start/stop operation, and is disposed at a location where a worker gripping the handle 38 can easily perform a pressing operation with their index finger. By an on operation (pressing) of the torch switch 331, an operation signal is output to the control portion 36, and when that operation signal is input to the welding power supply device 1, the welding power supply device 1 outputs welding electric power. When the on operation is released, the welding power supply device 1 stops the output of welding electric power. That is, welding is performed only while the torch switch 331 is being pressed.

The display 321 performs various display, and is disposed on the opposite side of the handle 38 as the torch switch 331, such that a worker who performs welding work by gripping the handle 38 can easily view a screen.

The operation buttons 332 are operation means for switching screens or changing various settings values, and are disposed between the grip portion of the handle 38 and the display 321 on the same side of the handle 38 as the display 321. The operation buttons 332 include an up button 332a, a down button 332b, a left button 332c, and a right button 332d. When each of the buttons 332a to 332d is pressed, a corresponding operation signal is output to the control portion 36, and the control portion 36 performs corresponding processing. The left button 332c and the right button 332d are operation means for switching the screen to be displayed in the display 321. The up button 332a and the down button 332b are operation means for changing the settings values being displayed in the display 321. Also, each of the buttons 332a to 332d fulfills a function for another operation in a menu screen to be described later.

A sensor that detects pressing of each operation button 332 is disposed on a substrate (not shown) and disposed inside the handle 38. Further, the display 321 is disposed on the same substrate. In the present embodiment, the display screen of the display 321 has a predetermined angle with respect to the substrate such that the worker can easily operate each operation button 332 while viewing the display screen of the display 321. Note that the display 321 may be disposed such that the display screen is parallel to the substrate. On the substrate there are mounted a microcomputer serving as the control portion 36, a memory serving as the storage portion 34, a communications module serving as the communications portion 31, and also various electronic components. The acceleration sensor 351 is also mounted on the substrate.

The acceleration sensor 351 is a three-axis acceleration sensor, and detects acceleration in each axis direction and outputs detection values to the control portion 36. The control portion 36 calculates inclination information of the welding torch 3 based on the detection values input from the acceleration sensor 351 of the sensor portion 35. The acceleration sensor 351 detects acceleration in each axis direction of three mutually orthogonal axes set in the acceleration sensor 351. Based on the detected acceleration, the control portion 36 calculates an acceleration in each axis direction of three mutually orthogonal axes set in the welding torch 3. In the present embodiment, because it is necessary to calculate the angle between the display screen of the display 321 and the vertical direction, the direction in which a short side of the display screen of the display 321 extends (hereinafter referred to as a "y axis direction") is used as one axial direction. The control portion 36 calculates the angle formed by the y-axis direction and the vertical direction (the direction in which gravitational acceleration acts) from the calculated acceleration of the welding torch 3 in each axis direction. More precisely, a direction indicating upward in the screen display in the y-axis direction is used to calculate an angle of inclination (hereinafter referred to as "torch inclination angle") relative to the upward direction in the vertical direction. Note that the method of calculating the torch inclination angle by the control portion 36 is not limited. In the present embodiment, part of the acceleration sensor 351 and the control portion 36 correspond to, for example, a "sensor portion", and the "torch inclination angle" corresponds to "inclination information", for example. Note that the sensor portion 35 may be provided with a gyro sensor instead of the acceleration sensor 351. In this case, the control portion 36 calculates the torch inclination angle from the acceleration around each axis detected by the gyro sensor.

Note that the external appearance of the welding torch 3 is not limited by the external appearance described above. For example, the placement and shape of the torch switch 331, the operation buttons 332, and the display 321 are not limited. Also, in the present embodiment, a case is disclosed where the operation buttons 332 are four independent buttons, but a single cross-shaped button may be used. Also, the number of buttons is not limited.

Next is a detailed description of switching of the screen displayed in the display 321.

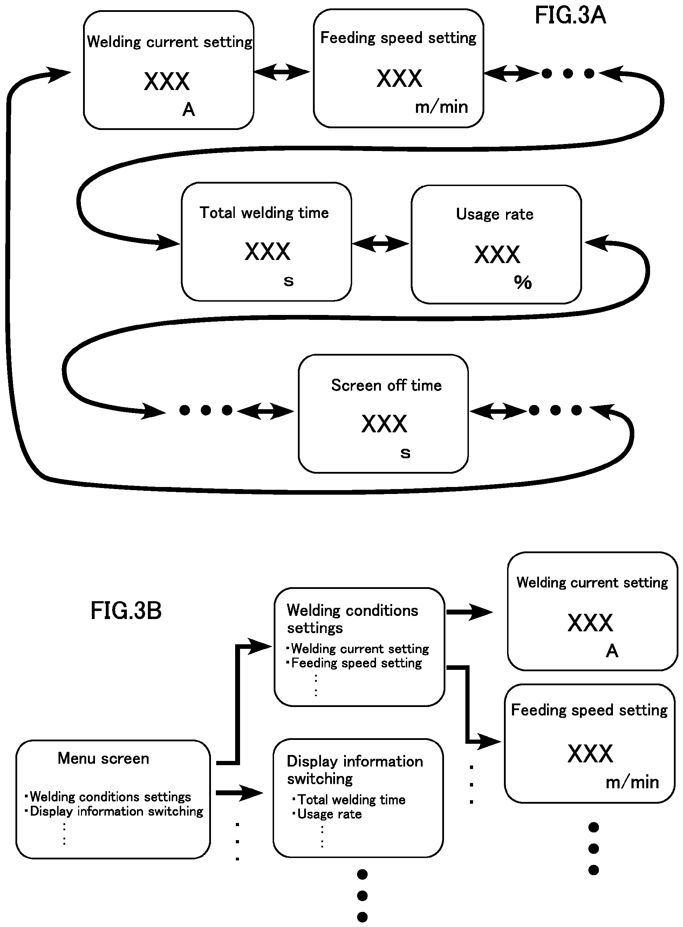

Screens to be displayed in the display 321 include a screen for setting welding conditions, a screen for displaying the total welding time, usage rate, or the like, and a display settings screen, for example. As shown in FIG. 3A, a sequence is set for each screen, and by pressing the left button 332c or the right button 332d, the screen displayed on the display 321 can be switched. For example, when the right button 332d is pressed in a state in which a "welding current setting" screen is being displayed, the displayed screen is switched to a "feeding speed setting" screen, and when the left button 332c is pressed in a state in which a "usage rate" display screen is being displayed, the displayed screen is switched to a "total welding time" display screen. In each screen, for example, the screen title and information such as settings values that have been read from the storage portion 34 are displayed. In the storage portion 34, the settings values and the like stored in the storage portion of the welding power supply device 1 are read and stored in advance through the communications portion 31. Also, the total welding time, the usage rate, and the like are stored in the storage portion 34 while being sequentially updated. Note that each item of information to be displayed may be read directly from the storage portion of the welding power supply device 1 through the communications portion 31 rather than being read from the storage portion 34.

In, for example, the screen for setting welding conditions, settings values can be changed by pressing the up button 332a or the down button 332b. For example, when the up button 332a is pressed in a state in which the "welding current setting" screen is being displayed, the setting value increases, and when the down button 332b is pressed, the setting value decreases. Specifically, the control portion 36 changes the setting value of the welding current stored in the storage portion 34 according to the operation signal input from the operation portion 33, and causes the display portion 32 to display the changed setting value. Also, the control portion 36 instructs the communications portion 31 to transmit the changed setting value to the welding power supply device 1. After receiving the changed setting value, the welding power supply device 1 updates the stored setting value based on the received setting value. Thus, the welding current setting value stored in the welding power supply device 1 is changed. Note that a configuration may also be adopted in which, instead of causing transmission of the setting value itself from the communications portion 31 to the welding power supply device 1, the control portion 36 causes transmission of a signal for increasing (or decreasing) the setting value based on an operation signal input from the operation portion 33.

However, because there are many screens to switch between, in a case where screens are switched in sequence as shown in FIG. 3A, it may take time until a desired screen is displayed. In the present embodiment, as shown in FIG. 3B, a menu screen is provided to allow the desired screen to be reached more easily.

As shown in FIG. 3B, a plurality of selection items such as "welding condition settings", "display information switching", and the like are displayed in the menu screen (the screen shown on the left side in FIG. 3B). By moving a cursor by pressing the up button 332a or the down button 332b and then pressing the right button 332d, it is possible to select the desired selection item. Then, in the display 321, a sub menu screen corresponding to the selected selection item is displayed (the screen shown in the center in FIG. 3B). By similarly selecting a selection from the sub menu screen, it is possible to display the desired screen. Note that FIG. 3B is only one example, and the configuration of the menu screen or the like is not limited. For example, a configuration may be adopted in which, when the cursor is moved to a selection in the menu screen, the sub menu is displayed in a pull-down menu or in a pop-up menu, or a configuration may be adopted in which a selection is displayed as an icon rather than as text. Also, when providing a menu screen, all screens can be reached from the menu screen, so the screen switching shown in FIG. 3A may be set to limit the switching to only frequently used screens.

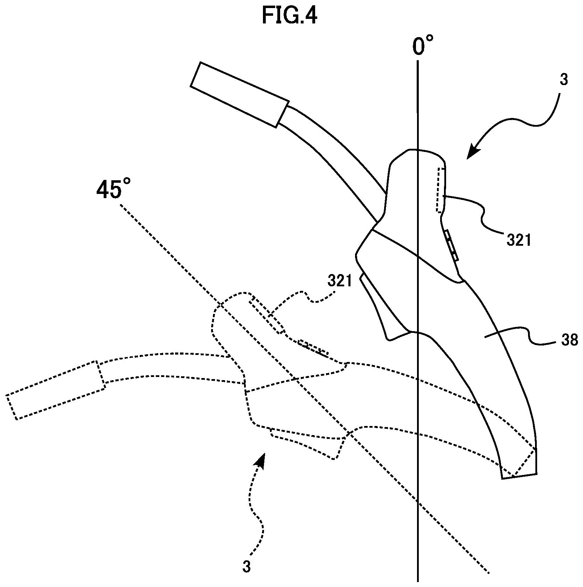

In the present embodiment, the menu screen is displayed when the welding torch 3 is set to a predetermined attitude and the left button 332c is pressed for a long time. FIG. 4 is a diagram for explaining the attitude of the welding torch 3. When operating each operation button 332 while viewing the display screen of the display 321 of the welding torch 3, the worker tilts the welding torch 3 such that the display screen of the display 321 is located in front of the worker. At this time, the display screen of the display 321 is in a state close to vertical (see the welding torch 3 indicated by a solid line in FIG. 4). Even if the welding torch 3 is tilted further, in many cases the display screen of the display 321 is inclined by about 45° from the vertical direction (see welding torch 3 indicated by the broken line in the figure). In the present embodiment, establishing the welding torch 3 in this sort of attitude is a first condition for switching to the menu screen. Specifically, the control portion 36 calculates the torch inclination angle (the angle of inclination of a direction indicating upward in the screen display in the y-axis direction relative to the upward direction in the vertical direction) based on the detection values input from the acceleration sensor 351. Then, in a case where the torch inclination angle is within a range of 0° to 45°, the control portion 36 judges that the welding torch 3 is at the predetermined attitude. Note that setting the torch inclination angle judgment range to 0° to 45° is only one example, and this is not a limitation. A narrower range may be adopted, or a wider range may be adopted. If the judgment range is too wide, unintended switching to the menu screen is more likely to occur, and if the judgment range is too narrow, switching to the menu screen becomes difficult.

When switching to the menu screen by the attitude of the welding torch 3 alone, the welding torch 3 switches to the menu screen even when the welding torch 3 is at the predetermined attitude by chance. In order to avoid this, in the present embodiment, pressing the left button 332c for a long time is a second condition for switching to the menu screen. That is, in a case where the operation signal of the left button 332c is continuously input for at least a predetermined time in a state where the calculated torch inclination angle is within a range of 0° to 45°, the control portion 36 performs display of the menu screen. Note that during welding work, that is, in a state where the torch switch 331 is being pressed, switching to the menu screen is not performed.

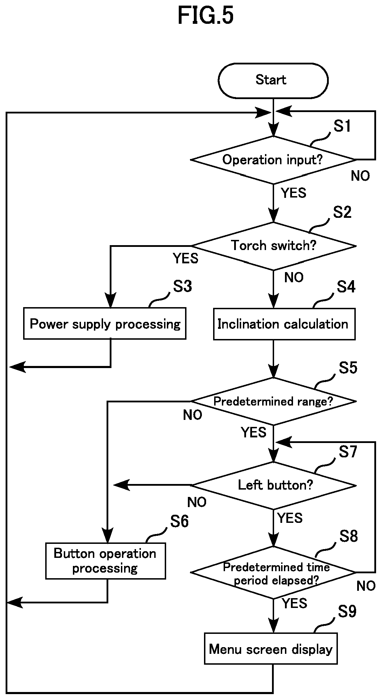

FIG. 5 is a flowchart for explaining processing to receive an operation input performed by the control portion 36. This processing is started when the welding torch 3 starts.

First, it is determined whether or not there was an operation input (S1). Specifically, it is determined whether or not an operation signal has been input from the operation portion 33. If there is no operation input (S1: NO), the process returns to step S1 and the determination of step S1 is repeated until there is an operation input. If there was an operation input (S1: YES), it is determined whether or not the operation input is an operation input of the torch switch 331 (S2). Specifically, it is determined whether or not the input operation signal is an operation signal by an on operation (pressing) of the torch switch 331. If the operation input is an operation input of the torch switch 331 (S2: YES), electric power supply processing is performed (S3). Specifically, the control portion 36 causes the communications portion 31 to output an operation signal to the welding power supply device 1. After receiving the operation signal, the welding power supply device 1 outputs welding electric power.

If operation input is not an operation input of the torch switch 331 (S2: NO), a torch inclination angle is calculated (S4). Specifically, an acceleration value in each axis direction is acquired from the acceleration sensor 351, and a torch inclination angle is calculated based on the acquired acceleration values. Then, it is determined whether or not the calculated torch inclination angle is within a predetermined range (S5). Specifically, it is determined whether or not the torch inclination angle is within the range of 0° to 45°.

If the torch inclination angle is not within the predetermined range (S5: NO), it is determined that the operation input is operation input for a simple button operation, so button operation processing is performed based on the operation input (S6), and then the process returns to step S1. The button operation processing is performed based on the operation signal input from the operation portion 33. For example, if an operation signal by the left button 332c or the right button 332d is input in a state where some screen is being displayed in the display 321, the control portion 36 performs processing to display the next screen (see FIG. 3A). Also, if an operation signal by the up button 332a or the down button 332b is input in a state where some setting screen is being displayed in the display 321, the control portion 36 performs processing to change settings values. Also, if an operation signal by the up button 332a or the down button 332b is input in a state where the menu screen is being displayed in the display 321, the control portion 36 performs processing to move the cursor on the menu screen.

If the torch inclination angle is within the predetermined range (S5: YES), it is determined whether or not the operation input is an operation input of the left button 332c (S7). If the operation input is an operation input of the left button 332c (S7: YES), it is determined whether or not the operation input of the left button 332c has continued for a predetermined time period (S8). If the predetermined time period has not elapsed (S8: NO), the process returns to step S7 and the determinations of steps S7 and S8 are repeated.

In step S7, if the operation input is not an operation input of the left button 332c (S7: NO), button operation processing is performed based on the operation input (S6) and the process returns to step S1. If the operation input of the left button 332c is terminated while the determinations of steps S7 and S8 are being repeated, that is, if the continuous time period of the operation input of the left button 332c ends before the predetermined time period elapses, that operation input is determined to be an operation input for operation of the left button 332c, and not operation input for a long press of the left button 332c. In the first determination in step S7, it is determined that the operation input is operation input for a simple button operation also in a case where it is determined that the operation input is not an operation input of the left button 332c. In both cases, button operation processing is performed based on the operation input (S6) .

In step S8, if the predetermined time period has elapsed (S8: YES), it is determined that the operation input is for a long press of the left button 332c, the menu screen is displayed (S9), and the process returns to step S1.

Note that the processing shown in the flowchart in FIG. 5 is only one example, and the processing to receive operation input performed by the control portion 36 is not limited to the processing described above.

Next is a description of advantages of the welding torch 3.

According to the present embodiment, in the welding torch 3, the operation buttons 332 and the display 321 are disposed in the handle 38. The worker can set welding conditions or the like by operating the settings screen displayed on the display 321 with the operation buttons 332. Therefore, it is not necessary for the worker to move to the welding power supply device 1 or the remote controller in order to change settings such as the welding conditions. Also, the control portion 36 calculates the torch inclination angle based on the detection values detected by the acceleration sensor 351 of the sensor portion 35. When the torch inclination angle is within the range of 0° to 45°, and a long press of the left button 332c has been performed, the menu screen is displayed on the display screen of the display 321. As a result, the worker can display the menu screen by performing a long press of the left button 332c in a state in which the welding torch 3 has been established at the predetermined attitude. Then, the worker can perform desired settings by selecting a desired screen in the menu screen, and operating the respective operation buttons 332. Accordingly, desired settings can easily be set even if a large number of settable items are provided.

Also, according to the present embodiment, one condition for switching to the menu screen is that the torch inclination angle is within the range of 0° to 45°. When the worker attempts to operate each operation button 332 while viewing the display screen of the display 321 of the welding torch 3, that condition is naturally satisfied. Therefore, the worker can satisfy the condition nearly unconsciously. Also, because a long press of the left button 332c is added to the conditions for switching to the menu screen, it is possible to prevent the welding torch 3 from being accidentally switched to the menu screen when the welding torch 3 is at the predetermined attitude by chance.

Note that in the present embodiment, the condition for displaying the menu screen is determined based on the torch inclination angle calculated by the control portion 36 from the detection values detected by the acceleration sensor 351, but this is not a limitation. For example, the condition for displaying the menu screen may be determined based on the detected acceleration of the acceleration sensor 351. In this case, the acceleration sensor 351 corresponds to, for example, a "sensor portion", and the acceleration in each axis direction detected by the acceleration sensor 351 corresponds to "inclination information", for example.

Also, in the present embodiment, a case is described where, when the torch inclination angle is within the predetermined range (the first condition) and a long press of the left button 332c has been performed (the second condition), the display screen of the display 321 displays the menu screen, but this is not a limitation. For example, the second condition may be that a long press of an operation button 332 other than the left button 332c has been performed. Also, instead of performing a long press of the operation button 332, a condition may be that the operation button 332 has been pressed, or that a predetermined number of presses (for example, a double click) have been performed, or that predetermined operation buttons 332 were pressed in a predetermined sequence (command input). Also, the menu screen may be displayed by satisfying only a first condition, without having a second condition. However, in this case, in order to prevent unintended switching to the menu screen, it is preferable to set a narrower predetermined range. Also, a condition that the torch inclination angle has continued to be within a predetermined range for a predetermined time period may be adopted. Also, the menu screen may be displayed when the torch inclination angle has changed in a prescribed manner, such as when the torch inclination angle changes from within the predetermined range to outside of the predetermined range, and then again enters the predetermined range. Also, in addition to determination of the torch inclination angle, a twisting motion or movement of the welding torch 3 may be detected and determined. Also, a predetermined angle of the welding torch 3 other than the torch inclination angle may be calculated and used for a determination.

Also, in the present embodiment, a case is described where the welding power supply device 1 and the wire feeding device 2 communicate through the signal line 8, but this is not a limitation. For example, communications may be performed by superimposing signals on the power cables 41 and 42 or the electric power transmission line 5. In this case, the signal line 8 connecting the welding power supply device 1 and the wire feeding device 2 is not required.

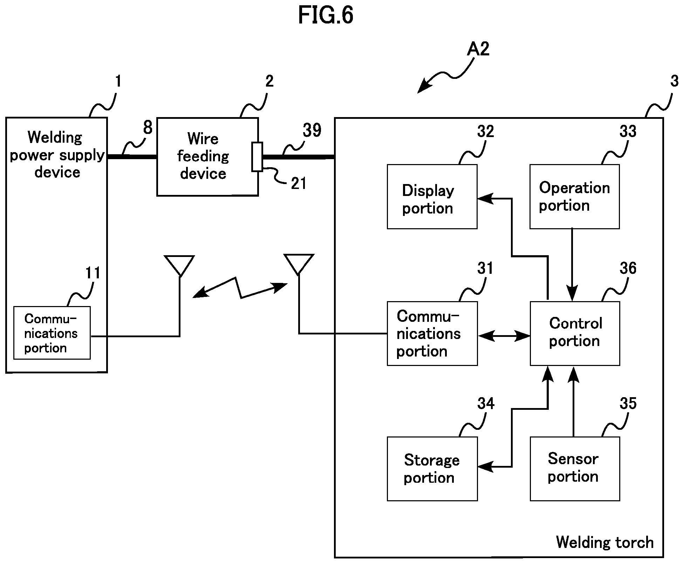

FIGS. 6 and 7 show another embodiment of present invention. Note that in these drawings, the same reference signs as those in the above first embodiment denote the same or similar elements as those in the above first embodiment.

FIG. 6 is a block diagram showing the functional configuration of a welding system A2 according to a second embodiment.

The welding system A2 shown in FIG. 6 differs from the welding system A1 according to the first embodiment in that the welding torch 3 performs wireless communications with the welding power supply device 1.

The communications portion 31 transmits and receives signals through an antenna. The communications portion 31 modulates a signal input from the control portion 36 and transmits the modulated signal as an electromagnetic wave. Also, the communications portion 31 demodulates the electromagnetic wave received by the antenna and outputs the demodulated electromagnetic wave to the control portion 36. The communications portion 31 wirelessly communicates with a communications portion 11 of the welding power supply device 1.

Similar effects as in the first embodiment can also be exhibited in the second embodiment.

FIG. 7 is a block diagram showing the functional configuration of a welding system A3 according to a third embodiment.

The welding system A3 shown in FIG. 7 differs from the welding system A1 according to the first embodiment in that the wire feeding device 2 is not provided. The welding system A3 is a non-consumable electrode type welding system in which a wire electrode is not used.

The welding power supply device 1 and the welding torch 3 are connected by the torch cable 39. The welding power supply device 1 is provided with a connector 12 that is, for example, a recessed connection terminal. The connector 12 connects the welding torch 3 and the welding power supply device 1 by inserting a protruding torch plug (not shown) provided at one end of the torch cable 39 of the welding torch 3. The power cable 41, the gas pipe 7, the electric power transmission line 5 and the signal line 8 inside of the welding power supply device 1 are respectively configured to be connected to the power cable 41, the gas pipe 7, the electric power transmission line and the signal line inside of the torch cable 39 through this connector 12.

Similar effects as in the first embodiment can also be exhibited in the third embodiment.

In the above first to third embodiments, a case related to a welding torch (a welding system) is described, but this is not a limitation. For example, the technology of the present invention is also applicable to an arc cutting torch (an arc cutting system) that cuts a workpiece W using an arc generated at a tip, an arc gouging torch (an arc gouging system) that performs groove engraving on a workpiece W, or the like. Furthermore, the technology of the present invention is not limited to thermal processing by an arc, and is also applicable to a thermal processing torch (a thermal processing system) that performs thermal processing such as gas welding or resistance welding.

## Claims

1. A thermal processing torch (3), comprising:
an operation portion (33) with an operation button (332);
a display portion (32) with a display screen (321);
a sensor portion (35) that detects inclination information of the thermal processing torch;
a communications portion (31) that transmits a signal;
a control portion (36) that causes the communications portion (31) to transmit a signal based on an input from the operation portion (33), and causes the display screen (321) to display a menu screen for selecting a desired screen among a plurality of screens based on the inclination information detected by the sensor portion (35); and **characterized in that** the control portion (36) causes the menu screen to be displayed in a case where the inclination information detected by the sensor portion (35) is within a predetermined range.

2. The thermal processing torch (3) according to claim 1,
wherein the control portion (36) causes the menu screen to be displayed in a case where a state in which the inclination detected by the sensor portion (35) is within a predetermined range has continued for a predetermined time period.

3. The thermal processing torch (3) according to claim 1,
wherein the control portion (36) causes the menu screen to be displayed in a case where the inclination detected by the sensor portion (35) is within a predetermined range, and an operation signal of a predetermined operation button (332) has been input from the operation portion (33).

4. The thermal processing torch (3) according to claim 1,
wherein the control portion (36) causes the menu screen to be displayed in a case where a state in which the inclination detected by the sensor portion (35) is within a predetermined range, and an operation signal of a predetermined operation button (332) is input from the operation portion (33), has continued for a predetermined time period.

5. The thermal processing torch (3) according to any one of claims 1 to 4,
wherein the sensor portion (35) detects the inclination of a direction indicating upward in a screen display of the display screen (321) relative to upward in the vertical direction as an angle.

6. The thermal processing torch (3) according to claim 5,
wherein the predetermined range is 0° to 45°.

7. The thermal processing torch (3) according to any one of claims 1 to 6,
wherein the sensor portion (35) is provided with an acceleration sensor.

8. The thermal processing torch (3) according to any one of claims 1 to 7,
wherein welding is performed using heat from an arc.

9. A thermal processing system, comprising:
a thermal processing torch according to any one of claims 1 to 8; and
a power supply device (1) that supplies electric power to the thermal processing torch (3).

## Patentansprüche

1. Brenner zur thermischen Bearbeitung (3), umfassend:
ein Bedienteil (33) mit einer Bedientaste (332);
ein Anzeigeteil (32) mit einem Anzeigebildschirm (321);
ein Sensorteil (35), das eine Neigungsinformation des Brenners zur thermischen Bearbeitung erfasst;
ein Kommunikationsteil (31), das ein Signal überträgt;
ein Steuerteil (36), das das Kommunikationsteil (31) veranlasst, ein Signal basierend auf einer Eingabe von dem Bedienteil (33) zu übertragen, und den Anzeigebildschirm (321) veranlasst, einen Menübildschirm anzuzeigen zum Auswählen eines gewünschten Bildschirms aus einer Vielzahl von Bildschirmen basierend auf der von dem Sensorteil (35) erfassten Neigungsinformation; und **dadurch gekennzeichnet, dass** das Steuerteil (36) den Menübildschirm veranlasst, angezeigt zu werden, wenn die vom Sensorteil (35) erfasste Neigungsinformation innerhalb eines vorgegebenen Bereichs ist.

2. Brenner zur thermischen Bearbeitung (3) nach Anspruch 1,
wobei das Steuerteil (36) bewirkt, dass der Menübildschirm angezeigt wird, wenn ein Zustand, in dem die durch das Sensorteil (35) erfasste Neigung innerhalb eines vorbestimmten Bereichs ist, für einen vorbestimmten Zeitraum fortgesetzt wurde.

3. Brenner zur thermischen Bearbeitung (3) nach Anspruch 1,
wobei das Steuerteil (36) bewirkt, dass der Menübildschirm angezeigt wird, wenn die von dem Sensorteil (35) erfasste Neigung innerhalb eines vorbestimmten Bereichs ist und ein Bediensignal von einer vorbestimmten Bedientaste (332) von dem Bedienteil (33) eingegeben ist.

4. Brenner zur thermischen Bearbeitung (3) nach Anspruch 1,
wobei das Steuerteil (36) bewirkt, dass der Menübildschirm angezeigt wird, wenn ein Zustand, in dem die von dem Sensorteil (35) erfasste Neigung innerhalb eines vorbestimmten Bereichs ist und ein Bediensignal einer vorbestimmten Bedientaste (332) von dem Bedienteil (33) eingegeben ist, für einen vorbestimmten Zeitraum fortgesetzt wurde.

5. Brenner zur thermischen Bearbeitung (3) nach einem der Ansprüche 1 bis 4,
wobei das Sensorteil (35) die Neigung einer nach oben zeigenden Richtung in einer Bildschirmanzeige des Anzeigebildschirms (321) relativ zu nach oben in der vertikalen Richtung als einen Winkel erfasst.

6. Brenner zur thermischen Bearbeitung (3) nach Anspruch 5,
wobei der vorbestimmte Bereich 0° bis 45° beträgt.

7. Brenner zur thermischen Bearbeitung (3) nach einem der Ansprüche 1 bis 6,
wobei das Sensorteil (35) mit einem Beschleunigungssensor versehen ist.

8. Brenner zur thermischen Bearbeitung (3) nach einem der Ansprüche 1 bis 7,
wobei Schweißen unter Verwendung von Wärme aus einem Lichtbogen erfolgt.

9. System zur thermischen Bearbeitung, umfassend:
einen Brenner zur thermischen Bearbeitung nach einem der Ansprüche 1 bis 8; und
eine Stromversorgungseinrichtung (1), die den Brenner zur thermischen Bearbeitung (3) mit elektrischer Energie versorgt.

## Revendications

1. Chalumeau de traitement thermique (3), comprenant :
une partie d'actionnement (33) ayant un bouton d'actionnement (332) ;
une partie d'affichage (32) ayant un écran d'affichage (321) ;
une partie capteur (35) qui détecte une information d'inclinaison du chalumeau de traitement thermique ;
une partie de communications (31) qui émet un signal ;
une partie de commande (36) qui amène la partie de communications (31) à émettre un signal sur la base d'une entrée provenant de la partie d'actionnement (33), et amène l'écran d'affichage (321) à afficher un écran de menu pour la sélection d'un écran souhaité parmi une pluralité d'écrans sur la base de l'information d'inclinaison détectée par la partie capteur (35) ; et **caractérisé en ce que** la partie de commande (36) amène l'écran de menu à être affiché dans un cas où l'information d'inclinaison détectée par la partie capteur (35) est dans les limites d'une plage prédéterminée.

2. Chalumeau de traitement thermique (3) selon la revendication 1,
dans lequel la partie de commande (36) amène l'écran de menu à être affiché dans un cas où un état dans lequel l'inclinaison détectée par la partie capteur (35) est dans les limites d'une plage prédéterminée s'est poursuivi pendant une durée prédéterminée.

3. Chalumeau de traitement thermique (3) selon la revendication 1,
dans lequel la partie de commande (36) amène l'écran de menu à être affiché dans un cas où l'inclinaison détectée par la partie capteur (35) est dans les limites d'une plage prédéterminée, et un signal d'actionnement d'un bouton d'actionnement (332) prédéterminé a été entré à partir de la partie d'actionnement (33).

4. Chalumeau de traitement thermique (3) selon la revendication 1,
dans lequel la partie de commande (36) amène l'écran de menu à être affiché dans un cas où un état dans lequel l'inclinaison détectée par la partie capteur (35) est dans les limites d'une plage prédéterminée, et un signal d'actionnement d'un bouton d'actionnement (332) prédéterminé est entré à partir de la partie d'actionnement (33), s'est poursuivi pendant une durée prédéterminée.

5. Chalumeau de traitement thermique (3) selon l'une quelconque des revendications 1 à 4,
dans lequel la partie capteur (35) détecte l'inclinaison d'une direction indiquant le haut dans un affichage d'écran de l'écran d'affichage (321) par rapport au haut dans la direction verticale sous la forme d'un angle.

6. Chalumeau de traitement thermique (3) selon la revendication 5,
dans lequel la plage prédéterminée est de 0° à 45°.

7. Chalumeau de traitement thermique (3) selon l'une quelconque des revendications 1 à 6,
dans lequel la partie capteur (35) est munie d'un capteur d'accélération.

8. Chalumeau de traitement thermique (3) selon l'une quelconque des revendications 1 à 7,
dans lequel un soudage est réalisé à l'aide de la chaleur d'un arc.

9. Système de traitement thermique, comprenant :
un chalumeau de traitement thermique selon l'une quelconque des revendications 1 à 8 ; et
un dispositif d'alimentation en énergie (1) qui alimente en énergie électrique le chalumeau de traitement thermique (3).
